# EUROPÄISCHE PATENTSCHRIFT

(11) **EP 1 019 183 B1**
(45) Veröffentlichungstag und Bekanntmachung des Hinweises auf die Patenterteilung: **30.10.2002**
(21) Anmeldenummer: 98951381.7
(22) Anmeldetag: 11.09.1998
(51) Int. Cl.: B01J 2/00

(54) **VORRICHTUNG ZUR DURCHFÜHRUNG EINER HETEROGEN KATALYSIERTEN REAKTION UND VERFAHREN ZUR HERSTELLUNG EINES KATALYSATORS**
DEVICE FOR CARRYING OUT A HETEROGENOUSLY CATALYSED REACTION AND METHOD FOR PRODUCING A CATALYST
DISPOSITIF PERMETTANT DE CONDUIRE UNE REACTION CATALYSEE DE FA ON HETEROGENE, ET PROCEDE DE PRODUCTION D'UN CATALYSEUR

(30) Priorität: 02.10.1997 DE 19743673
(43) Veröffentlichungstag der Anmeldung: 19.07.2000
(73) Patentinhaber: Ballard Power Systems AG, 73230 Kirchheim / Teck-Nabern (DE)
(72) Erfinder: SCHÜSSLER, Martin, D-89077 Ulm (DE); STEFANOVSKI, Tomas, D-71034 Böblingen (DE); ZUR MEGEDE, Detlef, D-73230 Kirchheim (DE)
(74) Vertreter: Dahmen, Toni, Dipl.-Ing.
(86) Internationale Anmeldenummer: EP9805796
(87) Internationale Veröffentlichungsnummer: WO99017867

(56) Entgegenhaltungen:
- EP-A- 0 303 438
- EP-A- 0 650 923
- DE-A- 3 928 790
- DE-C- 19 534 433
- GB-A- 2 188 559
- US-A- 4 771 026
- PATENT ABSTRACTS OF JAPAN vol. 007, no. 100 (C-164), 28. April 1983 & JP 58 026004 A (KANSAI NETSUKAGAKU KK), 16. Februar 1983
- PATENT ABSTRACTS OF JAPAN vol. 018, no. 506 (C-1252), 22. September 1994 & JP 06 172029 A (SUMITOMO METAL IND LTD), 21. Juni 1994
- PATENT ABSTRACTS OF JAPAN vol. 008, no. 244 (M-337), 9. November 1984 & JP 59 122807 A (MATSUSHITA DENKI SANGYO KK), 16. Juli 1984

## Beschreibung

Die vorliegende Erfindung betrifft eine Vorrichtung zur Durchführung einer heterogen katalysierten Reaktion unter Zuführung eines geeigneten Reaktionsgemisches auf einen Katalysator sowie ein Verfahren zur Herstellung eines Katalysators, der insbesondere zur Verwendung in einer derartigen Vorrichtung geeignet ist.

Bei einer heterogen katalysierten Reaktion handelt es sich beispielsweise um die Wasserstofferzeugung aus Kohlenwasserstoff oder Alkohol, insbesondere Methanol (Methanol-Reformierung), unter Zuführung eines Kohlenwasserstoff oder Alkohol und Wasser umfassenden Reaktionsgemisches auf einen Katalysator. Weitere Beispiele sind die Kohlenmonoxid-Verringerung unter Freisetzung von Kohlendioxid in einer sogenannten Wasserstoff-Shift-Reaktion, die Kohlenmonoxid-Oxidation unter Zuführung eines CO-haltigen Gases und eines O₂-haltigen Gases auf einen Katalysator sowie das Verbrennen eines brennbaren Eduktes unter Zusatz eines O₂-haltigen Gases in einem katalytischen Brenner.

Die Gewinnung von Wasserstoff aus Methanol basiert auf der Gesamtreaktion CH₃OH + H₂O → CO₂ + 3H₂. Zur Durchführung dieser Reaktion wird in der Praxis ein den Kohlenwasserstoff und Wasserdampf umfassendes Reaktionsgemisch unter Zufuhr von Wärme an einem geeigneten Katalysator entlanggeleitet, um in einem zwei- oder mehrstufigen Reaktionsablauf den gewünschten Wasserstoff zu erzeugen. Eine derartige Vorrichtung zur zweistufigen Methanol-Reformierung ist aus der EP 0 687 648 A1 bekannt. In der bekannten Vorrichtung wird das Reaktionsgemisch einem ersten Reaktor zugeführt, in dem nur ein Teilumsatz des Methanols angestrebt wird. Nach dem Durchströmen des ersten Reaktors wird das Gasgemisch, in welchem noch Anteile nicht umgesetzter Edukte enthalten sind, einem zweiten Reaktor zugeleitet, der restumsatzoptimiert aufgebaut ist. Die Reaktoren sind dabei als Platten- bzw. Schüttreaktoren ausgeführt, in welchen der Katalysator in Form einer Schüttung oder Beschichtung der Verteilungskanäle vorgesehen ist. Des weiteren sind Katalysatoren in Form von beschichteten Blechen, Netzen und Schäumen bekannt, die von dem Reaktionsgemisch durchströmt werden.

Aus der EP 0 217 532 B1 ist ein Verfahren zur katalytischen Erzeugung von Wasserstoff aus Gemischen von Methanol und Sauerstoff unter Verwendung eines gasdurchlässigen Katalysatorsystems bekannt, bei dem ein Wasserstoff-Generator mit einer oberen Reaktionszone und einer unteren Reaktionszone vorgesehen ist, wobei das Reaktionsgemisch von Methanol und Sauerstoff in die obere Reaktionszone eingespeist wird. Nach dem Durchströmen der oberen Reaktionszone wird das Reaktionsgemisch in die untere Reaktionszone geleitet, in welcher es durch eine spontane Einleitung der Oxidation des Methanols zu einem derartigen Anstieg der Temperatur kommt, daß eine teilweise Oxidation des Methanols in Anwesenheit eines Kupfer-Katalysators in der oberen Reaktionszone beginnt und Wasserstoff gebildet wird.

Das Dokument DE-C1-195 34 433 offenbart ein Verfahren zur Herstellung von Katalysatorschichten zur Durchführung einer heterogen katalysierten Reaktion (Methanolreformierung), bei dem aus mindestens einem Katalysatorpulver (bevorzugt CuO/ZnO/Al₂O₃) und Metallschaum (bevorzugt Kupfer, Nickel) durch Verpressen eine einen Formkörper bildende stark komprimierte Schicht gebildet wird, in der der Metallschaum als Trägerstruktur für das Katalysatormaterial dient. Das Katalysatorpulver wird vor dem Verpressen in die Poren des Metallschaums eingebracht, welcher durch elektrochemische Abscheidung des betreffenden Metalls auf einer Schaumstoff-Opferschicht, mit anschließender Entfernung dieser Opferschicht, erhältlich ist.

Das Dokument JP-A-06 172 029 offenbart ein Verfahren zur Herstellung einer Materialschicht, bei welchem aus Kohlenstoffagglomeraten, Bindemittel und pulverförmigem dendritischem Kupfer durch Verpressen eine einen Formkörper bildende stark komprimierte Schicht gebildet wird, in der das dentritische Kupfer als Trägerstruktur für das Katalysatormaterial dient.

Die Parallelanmeldung, Nr. EP98118264.5 (veröffentlicht als EP-A-0 906 890), welche die gleiche Prioritätsanmeldung in Anspruch nimmt (Anmeldedatum 26.09.1998), hat einen stark überlappenden Gegenstand zum Inhalt und bezieht sich auf (ein Verfahren zur Herstellung von) Katalysatoranordnungen für die Wasserdampf - Reformierung, die CO-Reduktion mit H₂, die CO-Oxidation mit O₂ sowie die katalytische Verbrennung.

Ausgehend von diesem Stand der Technik liegt der Erfindung die Aufgabe zugrunde, eine gattungsgemäße Vorrichtung in möglichst einfacher und kompakter Bauweise bereitzustellen, bei der die für die Umsetzung eines bestimmten Brennstoffmengenstroms nötige Menge an Katalysatormaterial minimiert ist. Des weiteren ist es Aufgabe der Erfindung, ein Verfahren zur Herstellung eines Katalysators anzugeben, mit dem die genannte Minimierung an Katalysatormaterial und die einfache und kompakte Bauweise erzielt werden können.

Zur Lösung dieser Aufgabe wird eine Vorrichtung zur Durchführung einer heterogen katalysierten Reaktion mit den Merkmalen

des Anspruches 8 vorgeschlagen. Die erfindungsgemäße Vorrichtung umfaßt demnach einen Katalysator, der durch Verpressen von Katalysatormaterial in eine dünne und großflächige Schicht gebildet ist, wobei das Reaktionsgemisch unter Druckabfall durch den Katalysator hindurchpreßbar ist. Im Unterschied zu den bekannten Vorrichtungen wie Wasserstoffreaktoren und dergleichen ist der Katalysator nicht als bloße Oberflächenstruktur ausgebildet, der von dem Reaktionsgemisch nur umströmt wird, sondern als stark komprimierte dreidimensionale Schicht, durch die das Reaktionsgemisch unter starker Druckbeaufschlagung hindurchgepreßt wird. Dadurch wird eine hohe Auslastung der aktiven Katalysatorzentren und eine hohe Reaktionsgeschwindigkeit an diesen Zentren erreicht. Aufgrund des starken Druckabfalls beim Durchtritt des Reaktionsgemisches durch die erfindungsgemäße Katalysatorschicht spielen die Strömungswiderstände der Zu- und Ableitung der Edukte und Produkte der Reaktion keine große Rolle, so daß Zu- und Ableitung der an der Reaktion beteiligten Stoffe einfach gestaltet werden kann. Durch die starke Komprimierung des Katalysatormaterials beim Verpressen wird eine sehr kompakte Katalysatorschicht erzielt, was zur Folge hat, daß der Anteil von Gasraum und nicht katalytisch wirksamen Festkörpern (wie beispielsweise Trägerbleche und dergleichen) am Gesamtvolumen und Gewicht des Reaktors gegenüber bekannten Vorrichtungen deutlich verringert ist. Es wird als Katalysatormaterial feinkörniges Katalysatorgranulat bzw. -pulver verwendet. Dadurch wird auch bei hohen Reaktionsgeschwindigkeiten ein guter Stoff- und Wärmetransport zu und von den inneren Bereichen der Katalysatorkörner gewährleistet. Außerdem nimmt der Anteil der durchströmbaren Poren mit abnehmender Korngröße zu, d.h. die Anzahl der "Sackgassen" für die Gasdurchströmung nimmt ab. Beim Durchströmen der Schicht tritt eine starke Verwirbelung der Gase auf, wodurch die Filmdiffusionswiderstände um die Körner des Katalysatormaterials verringert werden, was zu einem verbesserten Wärmetransport durch Konvektion führt.

In Ausgestaltung der Erfindung ist die Katalysatorschicht im wesentlichen senkrecht zur Strömungsrichtung des Reaktionsgemisches angeordnet. Dadurch werden besonders kurze Wege für die Gasdurchströmung erzielt. Durch die großflächige und stark komprimierte Ausgestaltung der erfindungsgemäßen Katalysatorschicht genügt bei senkrechter Durchströmung bereits ein kurzer Weg, um unter hohem Druckabfall einen hohen Reaktionsumsatz zu erzielen.

Das Katalysatormaterial ist mit einer Trägerstruktur verpreßt, wodurch das Katalysatormaterial mechanisch stabilisiert ist und/oder eine verbesserte Wärmeleitung vorliegt. Bei der Trägerstruktur handelt es sich um eine dreidimensionale netzartige Struktur (Matrix), die eine metallene Trägerstruktur ist. Als Metall wird dendritisches Kupfer verwendet.

In vorteilhafter Ausgestaltung der Erfindung enthält das Katalysatormaterial ein Edelmetall, insbesondere Platin. Das zugesetzte Edelmetall, bei dem es sich vorzugsweise um Platin handelt, wobei jedoch auch die Verwendung anderer Edelmetalle möglich ist, reagiert bereits bei relativ niederen Betriebstemperaturen und dient somit zur Aufheizung der Katalysatoranordnung. Durch diese Maßnahme wird das Kaltstartverhalten der Katalysatoranordnung beträchtlich verbessert, was sich insbesondere bei einer Anwendung im Bereich der mobilen Wasserstofferzeugung vorteilhaft auswirkt.

In besonders vorteilhafter Weiterbildung der Erfindung sind mehrere parallel geschaltete Schichten vorgesehen. Dadurch kann die insgesamt von dem Reaktionsgemisch zu durchströmende Fläche auf mehrere nachgeordnete, jedoch parallel geschaltete Schichten verteilt werden. Diese "Modulbauweise" führt zu einem besonders kompakten Aufbau der Katalysatoranordnung.

Zur vereinfachten Zu- und Ableitung der an der Reaktion beteiligten Stoffe sind in weiterer Ausgestaltung der Erfindung in der mindestens einen Katalysatorschicht Kanäle zum Leiten von Edukten des Reaktionsgemisches und der Reaktionsprodukte vorgesehen.

In weiterer Ausgestaltung der Erfindung erfolgt eine gegebenenfalls reaktionsbenötigte oder reaktionsfördernde Zuführung von Sauerstoff zu dem Reaktionsgemisch erst in der Ebene der mindestens einen Katalysatorschicht.

Zur weiteren Lösung der Erfindung wird ein Verfahren mit den Merkmalen des Anspruches 1 vorgeschlagen. Erfindungsgemäß wird demnach zur Herstellung eines insbesondere in einer erfindungsgemäßen Vorrichtung zur Wasserstofferzeugung verwendbaren Katalysators aus mindestens einem Katalysatorpulver durch Verpressen eine einen Formkörper bildende und stark komprimierte Schicht gebildet, wobei das Katalysatorpulver dendritisches Kupfer in Pulverform umfaßt, welches nach dem Verpressen eine netzartige Trägerstruktur für das katalysator material bildet.

In Ausgestaltung der Erfindung wird der Formkörper im Anschluß an das Verpressen einer Sinterung unterzogen, wodurch eine besonders gute Beständigkeit des erfindungsgemäßen Katalysators erreicht wird.

In weiterer Ausgestaltung der Erfindung werden beim Verpressen in den Formkörper Kanäle zum Leiten von Edukten und Produkten der katalytischen Reaktion eingebracht. Vorteilhafterweise werden diese Kanäle durch Einbringen von in einem nachfolgenden Verfahrensschritt wieder entfernbaren Platzhalterelementen erzeugt. Das Entfernen der Platzhalterelemente erfolgt vorteilhafterweise durch Verbrennen, Pyrolysieren, Lösen oder Verdampfen.

In weiterer vorteilhafter Ausgestaltung der Erfindung wird auf einem bereits gesinterten Formkörper eine weitere Pulverschicht aufgepreßt und anschließend gesintert. Dadurch kann in mehrstufiger Herstellung in einer Art Sandwichstruktur ein Katalysator mit mehreren übereinanderliegenden Schichten hergestellt werden, die durch Einbringen geeigneter Kanäle parallel verschaltet sind. Dadurch kann das gesamte von dem Reaktionsgemisch zu durchfließende Katalysatorvolumen auf eine kleinere Querschnittsfläche aurgeteilt und trotzdem das Konzept des hohen Druckabfalls über einen kleinen Strömungsweg beibehalten werden.

Die Erfindung ist anhand von Ausführungsbeispielen in der Zeichnung schematisch dargestellt und wird im folgenden unter Bezugnahme auf die Zeichnung ausführlich beschrieben.
- Figur 1: veranschaulicht in stark schematischer Darstellung die Funktionsweise einer erfindungsgemäßen Katalysatorschicht.
- Figur 2: zeigt in perspektivischer Darstellung eine erfindungsgemäße stapelförmige Anordnung parallel geschalteter Katalysatorschichten.
- Figur 3: zeigt in perspektivischer Darstellung ein weiteres Ausführungsbeispiel einer einzelnen erfindungsgemäßen Katalysatorschicht.

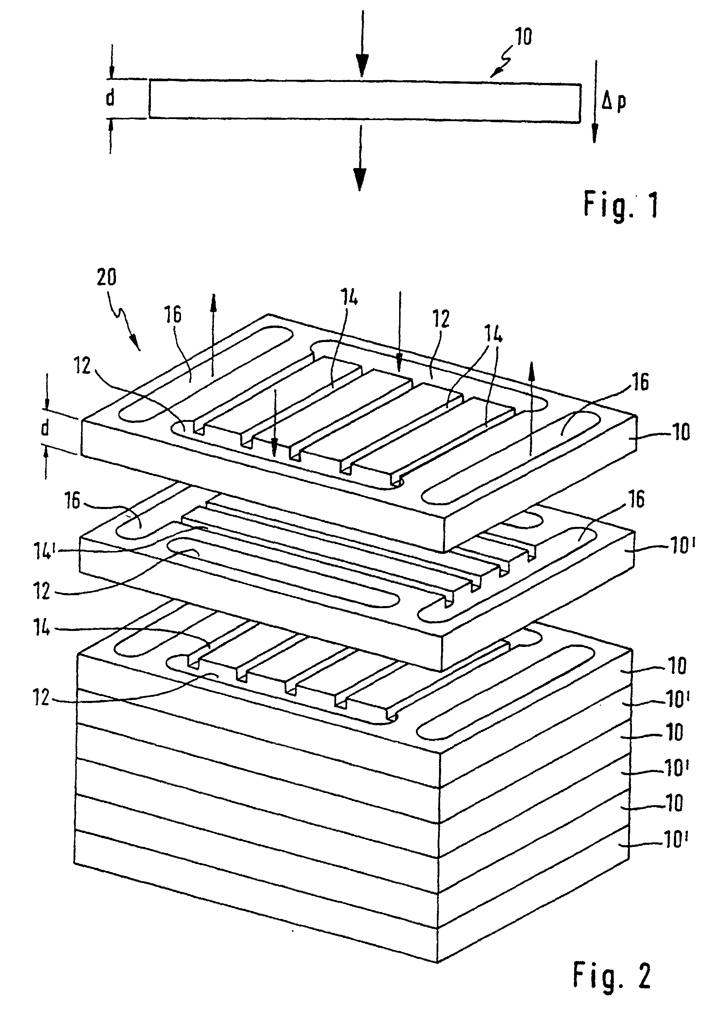

Figur 1 zeigt schematisch in seitlicher Ansicht eine erfindungsgemäße Katalysatorschicht 10, die durch Verpressen von Katalysatormaterial in eine dünne und großflächige, stark komprimierte Schicht gebildet ist. Die Schicht 10 bildet einen Formkörper mit einer Dicke d, die beispielsweise 1 mm beträgt. Als Katalysatormaterial wird ein feinkörniges Katalysatorpulver oder -granulat verwendet, dessen Körner einen Durchmesser von ca. 0,5 mm oder kleiner haben. Das Verpressen erfolgt beispielsweise bei Temperaturen von ca. 200° bis 500°C.

Die dargestellte Katalysatorschicht 10 ist Bestandteil einer nicht näher dargestellten Vorrichtung zur Wasserstofferzeugung, wobei die Edukte des Reaktionsgemisches unter Druckbeaufschlagung im wesentlichen senkrecht zu der Katalysatorschicht 10 auf diese zugeführt und durch sie hindurchgepreßt werden. Beim Durchströmen der Katalysatorschicht 10 erfährt das Reaktionsgemisch einen Druckabfall Δp von ca. 100 mbar und mehr (beispielsweise 1 bis 4 bar). Auf der gegenüberliegenden Seite der Katalysatorschicht 10 treten die katalytischen Reaktionsprodukte im Sinne des eingezeichneten Pfeiles aus.

Um dem Katalysatormaterial eine bessere mechanische Stabilität und/oder verbesserte Wärmeleitung zu verleihen, wird das Katalysatormaterial in eine Trägerstruktur verpreßt. Bei dieser Trägerstruktur handelt es sich um eine netzartige Matrix, die durch Vermischen des mindestens einen Katalysatorpulvers mit dendritischem Kupfer in Pulverform und Verpressen dieses Gemisches erhalten wird. Beim Verpressen bildet das dendritische Kupfer eine netzartige Matrixstruktur, in welche die Katalysatorkörner "eingebaut" sind. Das dendritische Kupferpulver läßt sich auch bei einem relativ geringen Massenanteil des Kupferpulvers zur Gesamtmasse der Schicht leicht zu einem Netz zusammenpressen bzw. versintern, hat eine große Oberfläche und ist selber katalytisch aktiv. Durch die Verwendung von dendritischem Kupferpulver wird deshalb ein stabilisierendes, fixierendes und wärmeverteilendes Netz im Mikrometer-Bereich erhalten.

Die Katalysatorschicht 10 weist eine relativ große Fläche von beispielsweise 100 cm² auf. Um eine kompaktere Bauweise zu erreichen, wird das von dem Reaktionsgemisch zu durchfließende Katalysatorvolumen auf mehrere Schichten aufgeteilt, die jedoch nicht nebeneinander, sondern hintereinander, aber parallel geschaltet angeordnet sind. Eine derartige Anordnung ist in Figur 2 dargestellt und zeigt einen eine Vielzahl von aufeinanderliegenden Katalysatorschichten 10, 10' umfassenden Stapel 20, wobei die in der Zeichnung oben liegenden Schichten zur besseren Veranschaulichung der Wirkungsweise beabstandet zueinander dargestellt sind.

Die Katalysatorschichten 10 weisen Kanäle 12, 14, 14' 16 zum Leiten von Edukten und Produkten der katalytischen Reaktion auf. In dem in Figur 2 dargestellten Ausführungsbeispiel sind in der Katalysatorschicht im wesentlichen parallel zu den Längskanten verlaufende Eduktkanäle 12 vorgesehen, die senkrecht zur Flächenebene der Katalysatorschicht durchgehende Führungskanäle bilden, wobei die Eduktkanäle 12 übereinanderliegender Katalysatorschichten 10, 10' im wesentlichen deckungsgleich zueinander angeordnet sind und somit einen durch den gesamten Stapel 20 von oben nach unten durchgehenden Führungskanal für die Edukte des Reaktionsgemisches bilden. Je nach Verwendung der Stapelanordnung wird durch die Eduktkanäle 12 ein spezifisches Reaktionsgemisch geleitet. Im Falle der Verwendung als Wasserstoffreaktor umfaßt das Reaktionsgemisch Alkohol, insbesondere Methanol, sowie chemisch gebundenen Wasserstoff, vorteilhafterweise in Form von Wasser. Im Falle der Verwendung des Stapels 20 in einer sogenannten H₂-Shift-Reaktion zur Verringerung von Kohlenmonoxid unter Freisetzung von Kohlendioxid umfaßt das Reaktionsgemisch Kohlenmonoxid und Wasserstoff. Im Falle des Einsatzes im Bereich der Kohlenmonoxid-Oxidation umfaßt das Reaktionsgemisch ein CO-haltiges Gas sowie ein O₂-haltiges Gas. Bei der Verwendung des Katalysatorstapels 20 in einem katalytischen Brenner umfaßt das Reaktionsgemisch ein brennbares Edukt sowie ein O₂-haltiges Gas.

Die Eduktkanäle 12 jeder zweiten Katalysatorschicht 10 stehen mit im wesentlichen parallel zur Flächenausdehnung der Katalysatorschicht 10 verlaufenden Verteilungskanälen 14 in Verbindung, die wenigstens einen Teil des durch die Eduktkanäle 12 eintretenden Reaktionsgemisches in das Innere der Katalysatorschicht 10 ableiten.

Erfindungsgemäß wird demnach jeweils ein Teil des durch die Eduktkanäle 12 eintretenden und durch den Stapel 20 geführten Reaktionsgemisches in jeder zweiten Schichtenebene durch die Verteilungskanäle 14 in das Innere der beiden angrenzenden Katalysatorschichten 10, 10' abgeleitet, wodurch eine Parallelschaltung der übereinanderliegend angeordneten Katalysatorschichten erreicht wird.

In dem in der Figur 2 dargestellten Ausführungsbeispiel sind wie beschrieben pro Katalysatorschicht 10, 10' zwei räumlich getrennte Eduktkanäle 12 vorgesehen. Dies kann dazu genutzt werden, um verschiedene Stoffe des Reaktionsgemisches getrennt voneinander zuzuführen, so daß einzelne Bestandteile des Reaktionsgemisches erst in der Ebene der Katalysatorschicht 10 zusammenkommen.

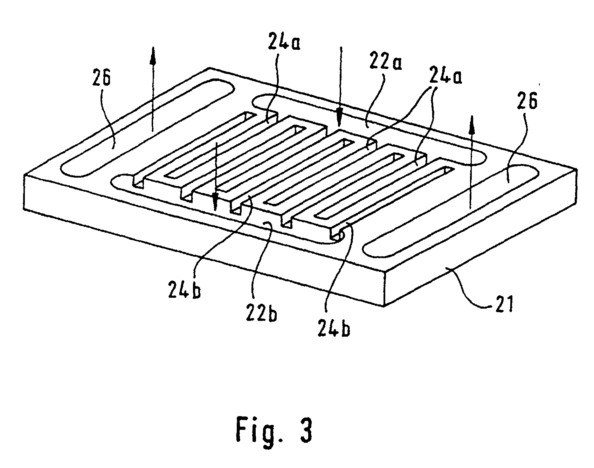

Vorteilhafterweise wird hierzu eine Katalysatorschicht mit einer Kanalstruktur eingesetzt, wie sie in dem Ausführungsbeispiel der Figur 3 dargestellt ist. Die in Figur 3 gezeigte Katalysatorschicht 21 weist Eduktkanäle 22a, 22b und Produktkanäle 26 auf, die in ihrer Funktion prinzipiell den in Zusammenhang mit der Figur 2 beschriebenen Edukt- und Produktkanälen 12 und 16 entsprechen. Abweichend von der in Figur 2 dargestellten Katalysatorschicht 10 stehen die zwei räumlich getrennt voneinander angeordneten Eduktkanäle 22a, 22b durch die Verteilungskanäle nicht miteinander in Verbindung, sondern die von jedem der Eduktkanäle 22a, 22b ausgehenden Verteilungskanäle 24a bzw. 24b erstrecken sich quer über die Katalysatorschicht 21, enden jedoch, bevor sie den gegenüberliegenden Eduktkanal 22b bzw. 22a erreichen. Dadurch wird eine Anordnung von alternierend ineinandergreifenden Kanälen geschaffen, was zur separaten Zuführung eines (weiteren) Gases, das zur Reaktion benötigt wird oder diese unterstützt, genutzt werden kann. Wird im Beispiel des Methanol-Reformers durch den einen Eduktkanal, beispielsweise den Eduktkanal 22a, eine Mischung aus Methanol und Wasserdampf zugeführt, so kann durch den entsprechend anderen Eduktkanal 22b Sauerstoff (Luft) zugeführt werden. Über die dem jeweiligen Eduktkanal zugeordneten Verteilungskanäle 24a, 24b werden die zugeleiteten Stoffe in der Katalysatorschicht 21 verteilt und treten erst in der Schicht selbst miteinander in Kontakt. Dadurch wird eine besonders homogene und sichere (Explosionsgefahr) Verteilung und Vermischung der Edukte erreicht. Selbstverständlich sind auch andere als die dargestellte Ausführungsformen mit nur einem Eduktkanal oder auch mehr als zwei Eduktkanälen möglich.

Entlang der Querkanten der Katalysatorschichten 10, 10' sind analog zu den Eduktkanälen 12 ausgebildete Produktkanäle 16 angeordnet, die ebenfalls im wesentlichen senkrecht zur Flächenausdehnung jeder Katalysatorschicht 10 verlaufende Führungskanäle bilden, die bei übereinandergelegten Katalysatorschichten 10 jeweils deckungsgleich mit den Produktkanälen der darüber bzw. darunterliegenden Katalysatorschicht 10, 10' zum Liegen kommen. Die Produktkanäle 16 jeder zweiten Katalysatorschicht 10' stehen mit Sammelkanälen 14' in Verbindung, die das aus der jeweils darüber- und darunterliegenden Katalysatorschicht 10, 10' austretende Reaktionsprodukt sammeln und in Querrichtung den Produktkanälen 16 zuführen, mittels welcher die Reaktionsprodukte durch den Stapel 20 abgeleitet werden.

In der dargestellten Ausführungsform einer erfindungsgemäßen Vorrichtung zur Durchführung einer heterogen katalysierten Reaktion wie der Wasserstofferzeugung verfügen die übereinandergelegten Katalysatorschichten 10, 10' also über jeweils alternierende Funktionsweisen; in den Katalysatorschichten 10 werden die durch die Eduktkanäle 12 zugeführten Edukte verteilt und über Verteilungskanäle 14 über die Fläche der darüber- und darunterliegenden Katalysatorschicht verteilt, wo sie diese im wesentlichen senkrecht und unter einem beträchtlichen Druckabfall durchströmen. In der jeweils folgenden Katalysatorschicht 10' werden die Produkte der katalytischen Reaktion in Sammelkanälen 14' gesammelt und den Produktkanälen 16 zum Abführen der Reaktionsprodukte aus dem Katalysatorstapel 20 zugeführt.

Natürlich ist die Erfindung nicht auf die dargestellte und beschriebene Ausführungsform beschränkt. Vielmehr sind auch Ausführungsformen denkbar, in welchen jede Katalysatorschicht das Zuführen, Verteilen, Sammeln und Abführen der Edukte bzw. Produkte übernimmt. Derartige komplexere Katalysatorschichten können beispielsweise durch Aufpressen und Sintern von pulverförmigen Katalysatormaterial auf bereits gesinterte Katalysatorschichten hergestellt werden.

Erfindungsgemäß werden somit Katalysatorschichten bereitgestellt, die einfach und in kompakter Weise herstellbar und zur Verwendung in Wasserstoffreaktoren zur katalytischen Wasserstofferzeugung, Wasserstoff-Shift-Stufen zur CO-Verringerung, Kohlenmonoxid-Oxidatoren sowie katalytischen Brennern geeignet sind. Durch die erfindungsgemäße Ausgestaltung des Katalysators wird eine modulare Bauweise ermöglicht, bei dem nur geringe thermische Verluste und keine großen Temperaturgradienten auftreten, wodurch eine über ein großes Volumen homogen ablaufende Reaktion ermöglicht wird. Das gesamte Katalysatorvolumen ist räumlich mit Edukten erreichbar, was zu einer deutlich verbesserten Startdynamik führt. Darüber hinaus wird die Gefahr der Zündung der homogenen Verbrennung von Methanol oder der Knallgasreaktion vermieden.

Durch geeignete Wahl der Prozeßparameter (Preßdruck, Temperatur, Art und Beschaffenheit der Ausgangsmaterialien wie Korngrößenverteilung, Porösität etc.) kann der Fachmann eine auf die jeweiligen Anforderungen zugeschnittene und bezüglich Schichtfolge, Wärmeverteilung, Strömungsverhältnisse und mechanische Eigenschaften wie Druckabfall und Stabilität optimierte erfindungsgemäße Katalysatorschicht bzw. Katalysatorschichtenanordnung erzeugen.

## Patentansprüche

1. Verfahren zur Herstellung einer Katalysatorschicht zur Durchführung einer heterogen katalysierten Reaktion, bei dem aus mindestens einem Katalysatorpulver, das dendritisches Kupfer in Pulverform enthält, durch Verpressen eine einen Formkörper bildende stark komprimierte Schicht (10, 10') gebildet wird, in der das dendritische Kupfer nach dem Verpressen eine netzartige Trägerstruktur für das Katalysatormaterial bildet.

2. Verfahren nach Anspruch 1, wobei der Formkörper im Anschluß an das Verpressen einer Sinterung unterzogen wird.

3. Verfahren nach Anspruch 1 oder 2, bei dem beim Verpressen in den Formkörper Kanäle (12, 14, 14', 16; 22a, 22b, 24a, 24b, 26) zum Leiten von Edukten und Produkten der katalytischen Reaktion eingebracht werden.

4. Verfahren nach Anspruch 3, bei dem die Kanäle (12, 14, 14', 16; 22a, 22b, 24a, 24b, 26) durch Einbringen von einem nachfolgenden Verfahrensschritt wieder entfernbaren Platzhalterelementen erzeugt werden.

5. Verfahren nach Anspruch 4, bei dem die Platzhalterelemente durch Verbrennen, Pyrolysieren, Lösen oder Verdampfen entfernt werden.

6. Verfahren nach einem der Ansprüche 2 bis 5, bei dem auf einen bereits gesinterten Formkörper eine weitere Pulverschicht aufgepreßt und anschließend gesintert wird.

7. Verfahren nach einem der vorstehenden Ansprüche, bei dem das Katalysatormaterial ein Edelmetall, insbesondere Platin, enthält.

8. Katalysatoranordnung zur Durchführung einer heterogen katalysierten Reaktion unter Zuführung eines geeigneten Reaktionsgemisches auf einen Katalysator, mit mindestens einer nach einem Verfahren gemäß einem der Ansprüche 1 bis 7 hergestellten Katalysatorschicht (10, 10'; 21) durch die das Reaktionsgemisch unter starker Druckbeaufschlagung unter Druckabfall (Δp) hindurchpreßbar ist.

9. Katalysatoranordnung nach Anspruch 8, bei der das Reaktionsgemisch die Katalysatorschicht (10, 10'; 21) im wesentlichen senkrecht zur Katalysatorschichtebene durchströmt.

10. Katalysatoranordnung nach Anspruch 8 oder 9, bei der eine Mehrzahl von parallel geschalteten Katalysatorschichten (10, 10'; 21) vorgesehen sind.

11. Vorrichtung nach einem der Ansprüche 8 bis 10, **dadurch gekennzeichnet, daß** in der mindestens einen Schicht (10, 10'; 21) Kanäle (12, 14, 14', 16; 22a, 22b, 24a, 24b, 26) zum Leiten von Edukten des Reaktionsgemisches und der Reaktionsprodukte vorgesehen sind.

12. Vorrichtung nach einem der Ansprüche 8 bis 11, **dadurch gekennzeichnet, daß** eine gegebenfalls reaktionsfördernde Zuführung von Sauerstoff getrennt von den übrigen Edukten erfolgt.

13. Vorrichtung nach Anspruch 12, **dadurch gekennzeichnet, daß** ein Zusammenführen und Mischen des Sauerstoffs mit den übrigen Edukten erst in der Schicht (10, 21) erfolgt.

## Claims

1. Method of producing a catalyst layer for carrying out a heterogeneously catalysed reaction wherein from at least one catalyst powder which contains dendritic copper in powder form a heavily compressed layer (10, 10') forming a shaped body is formed, in which the dendritic copper after pressing forms a network-like carrying structure for the catalyst material.

2. Method according to claim 1 wherein the shaped body following pressing is subjected to sintering.

3. Method according to claim 1 or 2 wherein during pressing channels (12, 14, 14', 16, 22a, 22b, 24a, 24b, 26) are introduced in the shaped body for the purpose of guiding educed matter and products of the catalytic reaction.

4. Method according to claim 3 wherein the channels (12, 14, 14', 16, 22a, 22b, 24a, 24b, 26) through a subsequent stage are made into space holder elements which can be removed once again.

5. Method according to claim 4 wherein the space holder elements are removed through burning, pyrolysing, releasing or vaporising.

6. Method according to one of the claims 2 to 5 wherein a further powder layer is pressed onto an already sintered shaped body and is subsequently sintered.

7. Method according to one of the preceding claims wherein the catalyst material contains a precious metal, in particular platinum.

8. Catalyst arrangement for carrying out a heterogeneously catalysed reaction with the addition of a suitable reaction mixture onto a catalyst with at least one catalyst layer (10, 10'; 21) produced according to a method according to one of the claims 1 to 7, through which it is possible to press the reaction mixture with great pressure impact with a fall in pressure (Δp).

9. Catalyst arrangement according to claim 8 wherein the reaction mixture flows through the catalyst layer (10, 10'; 21) essentially perpendicularly to the plane of the catalyst layer.

10. Catalyst arrangement according to claim 8 or 9 wherein a multitude of catalyst layers (10, 10'; 21) connected in parallel are provided.

11. Device according to one of the claims 8 to 10 **characterised in that** in at least one layer (10, 10'; 21) channels are provided for guiding matter educed from the reaction mixture and the reaction products.

12. Device according to one of the claims 8 to 11 **characterised in that** an addition of oxygen which promotes the reaction as appropriate takes place separately from the other educed matter.

13. Device according to claim 12 **characterised in that** the oxygen is brought together and mixed with the other educed matter only once in the layer (10, 21).

## Revendications

1. Procédé de fabrication d'une couche de catalyseur pour la conduite d'une réaction catalysée par catalyse hétérogène dans lequel on forme par compactage à partir d'au moins une poudre de catalyseur qui contient du cuivre dendritique sous forme pulvérulente une couche fortement comprimée (10, 10') formant un corps mis en forme dans laquelle, après le compactage, le cuivre dendritique forme une structure de support en réseau pour le matériau catalytique.

2. Procédé selon la revendication 1 où le corps mis en forme est soumis à un frittage après le compactage.

3. Procédé selon la revendication 1 ou 2 dans lequel, au cours du compactage, des canaux (12, 14, 14', 16 ; 22a, 22b, 24a, 24b, 26) sont formés dans le corps mis en forme pour le passage d'éduits et de produits de la réaction catalytique.

4. Procédé selon la revendication 3 dans lequel les canaux (12, 14, 14', 16 ; 22a, 22b, 24a, 24b, 26) sont produits par introduction d'éléments d'écartement qui peuvent être retirés dans une étape de procédé ultérieure.

5. Procédé selon la revendication 4 dans lequel les éléments d'écartement sont retirés par combustion, pyrolyse, dissolution ou évaporation.

6. Procédé selon l'une des revendication 2 à 5 dans lequel une autre couche pulvérulente est appliquée par pressage puis frittée sur un corps mis en forme déjà fritté.

7. Procédé selon l'une des revendications précédentes dans lequel le matériau catalytique contient un métal noble, en particulier le platine.

8. Agencement de catalyseur pour la conduite d'une réaction catalysée par catalyse hétérogène par introduction d'un mélange réactionnel approprié sur un catalyseur, comportant au moins une couche catalytique (10, 10' ; 21) produite par un procédé selon l'une des revendications 1 à 7, au travers de laquelle le mélange réactionnel peut être forcé sous une forte sollicitation de pression, sous une perte de charge (Δp).

9. Agencement de catalyseur selon la revendication 8 dans lequel le mélange réactionnel traverse la couche de catalyseur (10, 10' ; 21) sensiblement perpendiculairement au plan de la couche de catalyseur.

10. Agencement de catalyseur selon la revendication 8 ou 9 dans lequel il est prévu une multiplicité de couches de catalyseur (10, 10' ; 21) branchées en parallèle.

11. Dispositif selon l'une des revendications 8 à 10, **caractérisé en ce qu'**il est prévu dans au moins une couche (10, 10' ; 21) des canaux (12, 14, 14', 16 ; 22a, 22b, 24a, 24b, 26) pour le passage d'éduits du mélange réactionnel et des produits réactionnels.

12. Dispositif selon l'une des revendications 8 à 11, **caractérisé en ce qu'**un apport d'oxygène favorisant éventuellement la réaction a lieu séparément des autres éduits.

13. Dispositif selon la revendication 12, **caractérisé en ce qu'**un passage conjoint et un mélange de l'oxygène avec les autres éduits n'ont lieu que dans la couche (10, 21).
